# EUROPÄISCHE PATENTSCHRIFT

(11) **EP 2 526 019 B1**
(45) Veröffentlichungstag und Bekanntmachung des Hinweises auf die Patenterteilung: **07.04.2021**
(21) Anmeldenummer: 11700664.3
(22) Anmeldetag: 20.01.2011
(51) Int. Cl.: B64D 11/00

(54) **SAUERSTOFF-MODUL**
OXYGEN MODULE
MODULE D'OXYGÈNE

(30) Priorität: 21.01.2010 US 297050 P; 21.01.2010 DE 102010005278
(43) Veröffentlichungstag der Anmeldung: 28.11.2012
(73) Patentinhaber: Airbus Operations GmbH, 21129 Hamburg (DE)
(72) Erfinder: LANG, Dorothee, 25421 Pinneberg (DE); WITTKUGEL, Jorinde, 29683 Bad Fallingbostel (DE); SCHINEIS, Jennifer, 60598 Frankfurt am Main (DE); UMLAUFT, Sebastian, 22767 Hamburg (DE); VOGT, Thomas, 22547 Hamburg (DE)
(86) Internationale Anmeldenummer: PCT/EP2011/050743
(87) Internationale Veröffentlichungsnummer: WO 2011/089180

(56) Entgegenhaltungen:
- EP-A1- 0 213 036
- DE-C1- 4 330 209
- US-A- 3 503 394
- US-A- 4 023 874
- US-A1- 2006 237 585
- US-B1- 6 318 364

## Beschreibung

### GEBIET DER ERFINDUNG

Die Erfindung betrifft die Sauerstoffversorgung von Passagieren in einem Flugzeug. Insbesondere betrifft die Erfindung ein Sauerstoff-Modul sowie einen Sauerstoff-Versorgungskanal für ein Flugzeug, sowie eine Kombination derselben.

### HINTERGRUND DER ERFINDUNG

Aus der DE 10 2008 028 258 A1 ist ein System zur Sauerstoffversorgung von Personen in einem Luftfahrzeug bekannt. Das System weist eine Sauerstoffleitung, eine Sauerstoffzuführung und mehrere Anschlussstellen für Sauerstoffmasken auf, wobei sich die Sauerstoffleitung in einer Längsrichtung erstreckt und die Anschlussstellen mit der Sauerstoffleitung verbunden sind.

Andererseits ist aus der DE 19 531 916 A1 ein Verfahren und eine Vorrichtung zur Bereitstellung von Atemgas in Notsauerstoffsystemen für Flugzeuge bekannt.

Derzeitige dezentralisierte Systeme sind so gestaltet, dass eine Sauerstoffquelle, Masken und Schläuche in einem Container enthalten sind. Die Container-Klappe ist gleichzeitig Teil der Verkleidung und weist eine elektrisch angesteuerte Klappen-Verriegelung auf, welche ein automatisches Öffnen im Fall eines Druckabfalls auslöst, oder welche manuell zum Testen geöffnet werden kann. Während der Test-Funktion öffnet die Klappe nicht vollständig, so dass die Masken zurückgehalten werden und damit nicht vollständig herunterfallen. Der Zustand der Masken kann somit nur aufwendig untersucht werden. Außerdem muss die Installation der Sauerstoffcontainer und Verkleidungspaneele angepasst werden, wenn das Sitz-Layout verändert werden soll.

US 3,503,394 A offenbart ein abnehmbares und ersetzbares Passagier-Sauerstoffmodul. Zur Inspektion der Masken kann eine Klappe im Deckel des Sauerstoffmoduls manuell geöffnet werden.

US 6,318,364 B1 offenbart einen Modularen Ausfallbehälter für Flugzeug-Sauerstoffmasken.

EP 0 213 036 A1 offenbart eine Vorrichtung zum teilweisen Öffnen der Tür eines, eine Sicherheitsausrüstung, zum Beispiel Sauerstoffmasken enthaltenden Faches. US 4,023,874 A offenbart eine automatisch lösbare Rückhaltevorrichtung zur Verwendung in einem Sauerstoff-System-Staufach.

US 2006/0237585 A1 offenbart Innenarchitektonische Strukturen für Flugzeuge. DE 43 30 209 C1 offenbart ein Schienenprofil an einem Behälter einer Sauerstoff-Versorgungseinheit zum Einhängen des Behälters in eine Aufnahme an einem Fluggerät.

### ZUSAMMENFASSUNG DER ERFINDUNG

Es ist eine Aufgabe der Erfindung, ein Sauerstoff-Versorgungssystem zu schaffen, welches einerseits leicht zu montieren ist und andererseits test- und wartungsfreundlich ist.

Diese und weitere Aufgaben werden durch den Gegenstand der jeweiligen unabhängigen Ansprüche erfüllt. Weitere Ausführungsformen sind in den jeweiligen abhängigen Ansprüchen beschrieben.

Durch die Erfindung wird ein flexibles Sauerstoff-Versorgungssystem bereitgestellt, welches leicht an unterschiedliche Sitz-Layouts angepasst werden kann und welches signifikant verbessert ist hinsichtlich der Test- bzw. der Wartungsmöglichkeiten. Eine Sauerstoffzuführung wird für alle Passagiere sichergestellt, ohne dass es eine ÜberMenge an Sauerstoff-Versorgungssystemen gibt, welches ein unnötiges zusätzliches Gewicht bedeuten würde. Die Installation bzw. die Wartung wird erleichtert durch einfache Schnell-Verbinder und Löse-Schnittstellen. Die Erfindung ermöglicht das Testen des vollständigen Öffnens der Verkleidungs-Klappen, was Montagefehler verhindert, welche zu einem Nicht-Öffnen der Containerklappe führen könnte. Eine gute Zugänglichkeit der Masken für eine Untersuchung der Masken stellt die gewünschte Funktionalität der Masken sicher.

Als weiteren Vorteil kann genannt werden, dass die Atemmasken zusammen mit den Sauerstoff-Schläuchen akkurat verpackt bleiben können, während eines Tests der Funktion der Verkleidungs-Klappen.

Ein Sauerstoff-Modul gemäß der Erfindung weist generell eine Sauerstoffquelle, eine Maske und einen Schlauch zwischen der Sauerstoffquelle und einer Maske auf. Das Sauerstoff-Modul weist ferner Befestigungselemente zur Befestigung in einem Versorgungskanal eines Flugzeugs auf.

Es wird angemerkt, dass die Sauerstoffquelle entweder eine Chemie-Sauerstoffquelle sein kann, bei welcher chemisch gebundener Sauerstoff in einer exothermen Reaktion freigegeben wird, oder ein Sauerstoffreservoir sein kann, welches beispielsweise rein pneumatisch über eine Blende oder aber elektrisch gesteuert wird, wobei entsprechende elektrische Verbindungen / Kontakte zu einer Steuereinheit im Flugzeug vorhanden sein können.

Außerdem weist das Sauerstoff-Modul gemäß der Erfindung einen Deckel mit einem Verriegelungselement auf, wobei der Deckel gemäß einer Ausführungsform automatisch entriegelt wird, sobald das Sauerstoff-Modul in einem Versorgungskanal eines Flugzeugs eingesetzt ist und der Deckel des Sauerstoff-Moduls durch die Verkleidungs-Klappe an dem Versorgungskanal abgedeckt ist.

Da der Deckel des Sauerstoff-Moduls im Wesentlichen das Herausfallen der Sauerstoff-Masken verhindern soll (bei der Montage und bei Tests), kann der Deckel als Platte ausgebildet sein, oder auch als Gitter oder als Folie. Durch die Verwendung einer Folie oder eines Gitters als Deckel wäre die gewünschte Funktion bei geringerem Gewicht erfüllt.

Das heißt, zunächst ist es möglich, das Sauerstoff-Modul, welches als vormontiertes Element in einen Flugzeugkörper hineingebracht werden kann, durch einfaches Einklicken in einen Versorgungskanal einzusetzen. In dieser Position verhindert der manuell geschlossene und verriegelte Deckel des Sauerstoff-Moduls ein Herausfallen der Masken. Sobald allerdings die Verkleidungs-Klappe, welche den Versorgungskanal zum Passagierraum hin abschließt, geschlossen wird, wird der Verriegelungsmechanismus an dem Sauerstoff-Modul automatisch derart betätigt, dass der Deckel des Sauerstoff-Moduls entriegelt wird.

Ein Deckel-Bereich des Sauerstoff-Moduls kann ferner über ein Löseelement mit einer Verkleidungs-Klappe gekoppelt sein. Das Löseelement kann hierbei eine mechanische Verbindung wie zum Beispiel eine Schnur oder Leine sein, welche den Deckel-Bereich des Sauerstoff-Moduls entriegelt und auf-zieht, sobald die Verkleidungs-Klappe über ein bestimmtes Maß hinaus geöffnet wird. Dieses Maß wird bei einem Öffnungs-Test der Verkleidungs-Klappen nicht erreicht, sodass keine Kraft über das mechanische Löseelement auf den Deckel-Bereich oder eine Verriegelung des Deckel-Bereichs übertragen wird, womit der Deckel-Bereich des Sauerstoff-Moduls bei einem solchen Test geschlossen bleibt.

Es wird angemerkt, dass der als Deckel-Bereich bezeichnete Bereich des Sauerstoff-Moduls einerseits der Teil des Gehäuses des Sauerstoff-Moduls sein kann, der auch einfach als Deckel bezeichnet werden kann, und dass der als Deckel-Bereich bezeichnete Bereich andererseits auch nur ein Teil des Deckels sein kann, der mittels des Löseelementes geöffnet werden kann.

Im Fall eines Druckabfalls würde nun automatisch über einen elektrischen Kontakt die Verkleidungs-Klappe des Versorgungskanals gelöst, die Verkleidungs-Klappe würde sich vollständig öffnen, und der Deckel des Sauerstoff-Moduls würde sich ebenfalls öffnen, so dass die Sauerstoffmasken herausfallen können.

Das Verriegelungselement an dem Deckel des Sauerstoff-Moduls ist gemäß einer einem ersten Aspekt der Erfindung so gestaltet, dass der Deckel des Sauerstoff-Moduls verriegelt werden kann, bei geschlossener Verkleidungs-Klappe, so dass für einen Test die Verkleidungs-Klappe über einen elektrischen Impuls ausgelöst, das heißt geöffnet werden kann, ohne dass in diesem Fall der Deckel des Sauerstoff-Moduls sich ebenfalls öffnet.

Zum manuellen Verriegeln des Deckels kann eine Öffnung in Form eines Schlitzes oder einer anders geformten Öffnung vorgesehen sein, durch welche hindurch ein Betätigen des Verriegelungselementes des Sauerstoff-Moduls möglich ist. Andererseits kann die Verkleidungs-Klappe ein Betätigungselement aufweisen, über welches das Verriegelungselement betätigt und damit der Deckel des Sauerstoff-Moduls verriegelt wird. Es ist auch möglich, dass der Deckel mittels eines elektrischen Aktuators oder mittels eines elektromagnetischen Schalters verriegelt wird. Das hierfür benötigte elektrische Signal könnte beispielsweise über die Befestigungselemente übertragen werden, mit welchen das Sauerstoff-Modul in dem Versorgungskanal befestigt ist.

Ein weiterer Aspekt der Erfindung ist die Möglichkeit, die Anordnung der Sauerstoff-Module in einem Versorgungskanal eines Flugzeugs an ein Sitz-Layout anzupassen bzw. an eine Veränderung des Sitz-Layouts anzupassen. Hierfür wird gemäß der Erfindung ein Versorgungskanal vorgesehen, welcher in Längsrichtung des Flugzeugkörpers durchgängig ausgebildet ist und an welchem eine Vielzahl von Befestigungselementen bzw. eine Befestigungsschiene als Befestigungsstruktur vorgesehen ist, an welcher ein Sauerstoff-Modul mittels Einhängen oder Einklicken befestigt werden kann. Zum Verschließen des Versorgungskanals ist üblicherweise eine Vielzahl von Verkleidungs-Klappen notwendig, welche in der Regel die Länge bzw. die Abmaße der sonstigen im Passagierraum verwendeten Paneele aufweisen.

Gemäß der Erfindung kann in einem Flugzeug, welches einen in Längsrichtung des Flugzeugkörpers durchgängig ausgebildeten Versorgungskanal aufweist, an beliebigen Stellen innerhalb des Versorgungskanals ein Sauerstoff-Modul eingesetzt werden. Selbst wenn das Sauerstoff-Modul an einer Stelle angeordnet ist, welche von zwei benachbarten Verkleidungs-Klappen abgedeckt wird, wird die generell oben beschriebene Funktionsweise nicht beeinträchtigt, da die Verkleidungs-Klappen simultan geöffnet werden können.

Die oben beschriebenen Aspekte und weitere Aspekte, Merkmale und Vorteile der Erfindung können ebenfalls aus den Beispielen der Ausführungsformen entnommen werden, welche im Folgenden unter Bezugnahme auf die anhängenden Zeichnungen beschrieben werden.

### KURZE BESCHREIBUNG DER ZEICHNUNGEN

Figur 1 ist eine isometrische Darstellung eines Sauerstoff-Moduls vor dem Einsetzen in einen Versorgungskanal.
Figur 2 zeigt ein Sauerstoff-Modul, welches in einem Versorgungskanal eingesetzt ist, mit einer Verkleidungs-Klappe, gemäß einer ersten Ausführungsform eines ersten Aspekts der Erfindung.
Figur 3 zeigt ein Sauerstoff-Modul, welches in einem Versorgungskanal eingesetzt ist, mit einer Verkleidungs-Klappe, gemäß einer zweiten Ausführungsform des ersten Aspekts der Erfindung.
Die Figuren 4 bis 6 zeigen einen Bewegungsablauf, bei welchem der Deckel des Sauerstoff-Moduls manuell verriegelt wird.
Figur 7 zeigt das Öffnen der Verkleidungs-Klappe bei verriegeltem Deckel.
Figur 8 zeigt ein manuelles Schließen der Verkleidungs-Klappe.
Figur 9 und 10 zeigen ein automatisches Entriegeln des Deckels des Sauerstoff-Moduls durch das Schließen der Verkleidungs-Klappe.
Figur 11 zeigt ein Sauerstoff-Modul, welches in einen Versorgungskanal eingesetzt ist, mit einer Verkleidungs-Klappe, gemäß einer Ausführungsform eines zweiten Aspekts der Erfindung.
Figur 12 zeigt ein Sauerstoff-Modul in einem Versorgungskanal nach einem automatischen, vollständigen Öffnen der Verkleidungs-Klappe.

### DETAILLIERTE BESCHREIBUNG DER AUSFÜHRUNGSFORMEN

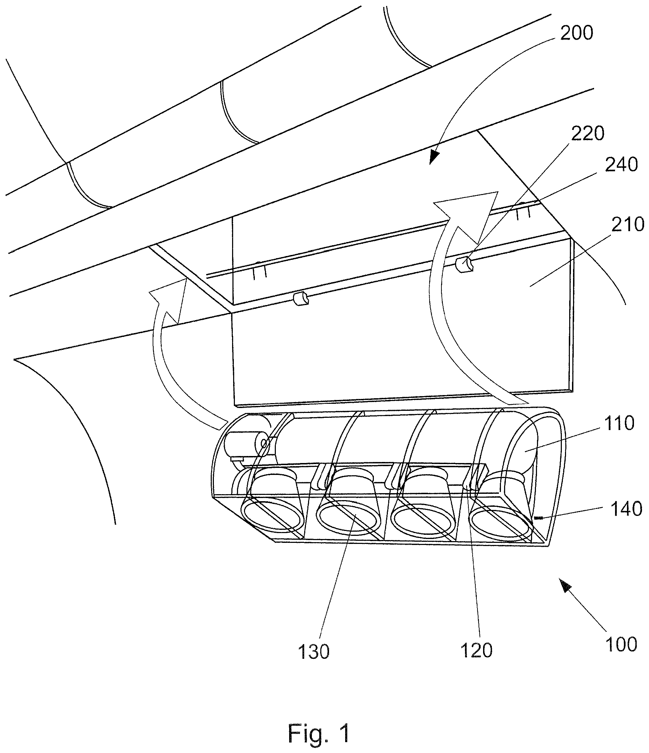

Figur 1 zeigt ein Sauerstoff-Modul 100 gemäß der Erfindung. Das Sauerstoff-Modul 100 weist eine Sauerstoffquelle 110, Schläuche 120 sowie Masken 130 auf. Ferner weist das Sauerstoff-Modul 100 Befestigungselemente 140 auf, welche geeignet sind, in korrespondierende Befestigungselemente 240 an dem Versorgungskanal einzugreifen.

Der in Figur 1 dargestellte Versorgungskanal 200 weist eine Verkleidungs-Klappe 210 sowie Gelenke 220 und Befestigungselemente 240 auf. Die Verkleidungs-Klappe 210 ist gelenkig an den Gelenken 220 montiert, so dass ein Auslösen bzw. Öffnen des Versorgungskanals ein Aufklappen der Verkleidungs-Klappen 210 um die Gelenkpunkte 220 herum bewirkt.

Es wird angemerkt, dass die hier dargestellten Befestigungselemente 140 und 240 lediglich exemplarisch sind und eine Vielzahl von anderen Möglichkeiten zum Einhängen bzw. Einklicken eines Sauerstoff-Moduls in einem Versorgungskanal vorstellbar sind. Ferner können diese Befestigungselemente 140, 240 als Kontakte für die Übertragung von elektrischen Signalen, Impulsen oder von elektrischer Energie verwendet werden, für den Fall, dass zum Beispiel die Sauerstoffabgabe an eine Maske elektrisch oder elektronisch geregelt wird.

Darüber hinaus wird angemerkt, dass das in Figur 1 dargestellte Sauerstoff-Modul mit vier Masken ausgerüstet ist. Ein Sauerstoff-Modul gemäß der Erfindung kann jedoch auch mit nur einer Maske, einem Schlauch und einer Sauerstoffquelle ausgestattet sein. Entsprechend ist auch ein Sauerstoff-Modul mit zwei, drei oder mehr Masken vorstellbar.

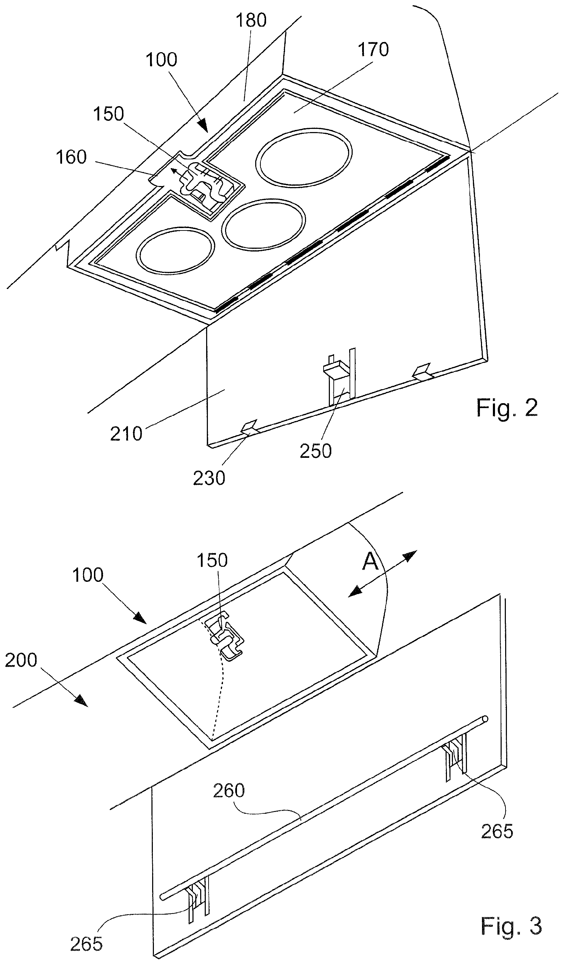

Wie in Figur 2 dargestellt, weist das Sauerstoff-Modul 100 gemäß einem ersten Aspekt der Erfindung ein Verriegelungselement 150 mit einer korrespondierenden Lasche 160 auf. Das Verriegelungselement 150 ist an dem Deckel 170 des Sauerstoff-Moduls 100 angeordnet und die Lasche 160 entsprechend an einem Gehäuse bzw. Rahmen 180 des Sauerstoff-Moduls. Auf der dem Verriegelungselement 150 gegenüberliegenden Seite weist der Deckel 170 entsprechend angeordnete Scharniere auf, so dass der Deckel 170 entsprechend der Verkleidungs-Klappe 210 geöffnet werden kann.

In Figur 2 ist eine Verkleidungs-Klappe 210 gemäß einer ersten Ausführungsform des ersten Aspekts der Erfindung dargestellt. Diese Verkleidungs-Klappe weist ein Betätigungselement 250 auf, welches in einer bestimmten Position dem Verriegelungselement 150 gegenüberliegend angeordnet ist. Entlang der Längsrichtung eines Flugzeugkörpers bzw. des Versorgungskanals kann eine Vielzahl von Betätigungselementen 250 vorgesehen sein, welche in sinnvollen Abständen zueinander angeordnet sein können. Auf diese Weise wird eine Anordnung von Sauerstoff-Modulen in Abständen ermöglicht, welche zu üblichen Abständen zwischen Sitz-Reihen für Passagiere korrespondieren. Ferner ist in Figur 2 ein Element 230 angedeutet, welches den elektrisch ausgelösten Öffnungsmechanismus der Verkleidungs-Klappe darstellt.

In Figur 3 ist eine Verkleidungs-Klappe gemäß einer weiteren Ausführungsform des ersten Aspekts der Erfindung dargestellt. Hier ist das Betätigungselement eine Schiene 260, welche über die Elemente 265 bedienbar ist, so dass die Schiene 260, welche im Eingriff mit dem Verriegelungselement 150 an dem Sauerstoff-Modul 100 ist, das Verriegelungselement 150 von einer Freigabe-Position, in welcher der Deckel des Sauerstoff-Moduls geöffnet werden kann, in eine Verriegelungsposition bewegen kann, in welcher der Deckel verriegelt ist. Wie durch den Pfeil A angedeutet, ist in diesem Fall eine beliebige Positionierung des Sauerstoff-Moduls 100 innerhalb des Versorgungskanals 200 möglich, da in jeder Position eine Betätigung des Verriegelungselementes 150 durch die Schiene 260 möglich ist.

Im Folgenden wird die Verriegelung des Deckels des Sauerstoff-Moduls in einzelnen Schritten beschrieben.

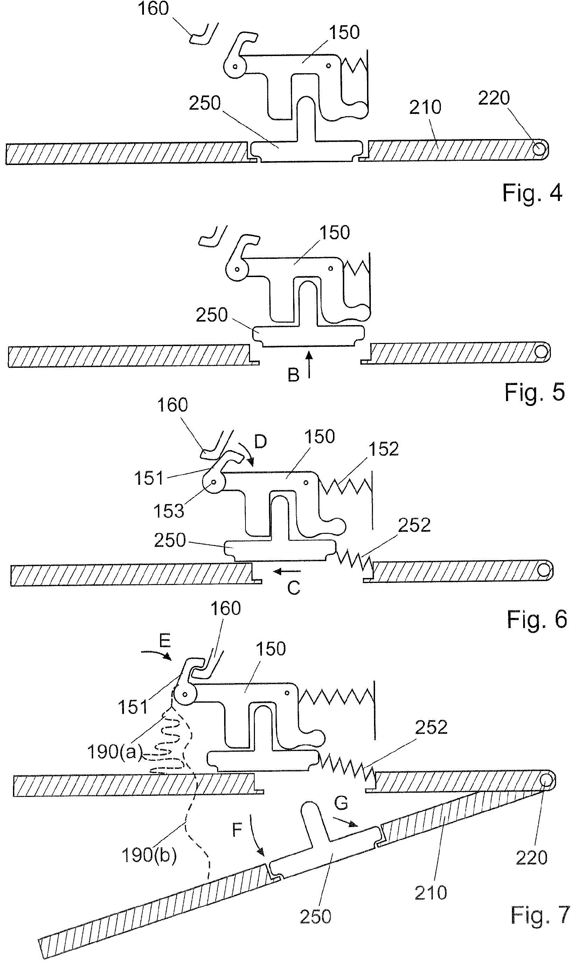

Figur 4 zeigt die Situation, in welcher das Sauerstoff-Modul in dem Versorgungskanal eingesetzt ist und die Verkleidungs-Klappe 210 geschlossen ist. In diesem Fall liegt das Betätigungselement 250 benachbart zu dem Verriegelungselement 150.

In Figur 5 wird nun das Betätigungselement 250 in Richtung des Pfeils B gedrückt. Durch das Verschieben des Betätigungselementes 250 greift dieses in eine Aussparung an dem Verriegelungselement 150 ein.

Wie in Figur 6 dargestellt, wird nun das Betätigungselement 250 zusammen mit dem Verriegelungselement 150 in Richtung des Pfeils C verschoben. Bei einer derartigen Verschiebung wird einerseits eine Feder 252 an dem Betätigungselement 250 und auch eine Feder 152 an dem Verriegelungselement 150 gespannt. Mit Erreichen der Lasche 160 wird ein Haken 151 um einen Drehpunkt 153 herum in Richtung des Pfeils D geschwenkt. Sobald der Haken 151 an der Lasche 160 vorbei in Richtung des Pfeils C geschoben wurde, sorgt eine Rückstellfeder (nicht dargestellt) dafür, dass der Haken 151 sich in seine ursprüngliche Position zurückbewegt bzw. wieder aufstellt.

Figur 7 zeigt ein Öffnen der Verkleidungs-Klappe 210, zum Beispiel im Test-Fall. Durch die oben beschriebene manuelle Betätigung des Verriegelungselementes 150 ist diese mit ihrem Haken 151 an der Lasche 160 eingehakt, so dass der Deckel des Sauerstoff-Moduls sich nicht öffnet, selbst wenn die Verkleidungs-Klappe 210 um den Gelenkpunkt 220 in Richtung des Pfeils F aufklappt. Sobald das Betätigungselement 250 beim Aufklappen der Verkleidungs-Klappe 210 außer Kontakt mit dem Verriegelungselement 150 kommt, zieht die Feder 252 das Betätigungselement 250 in seine Ausgangsposition und damit in eine in der Verkleidungs-Klappe vorgesehene Öffnung zurück.

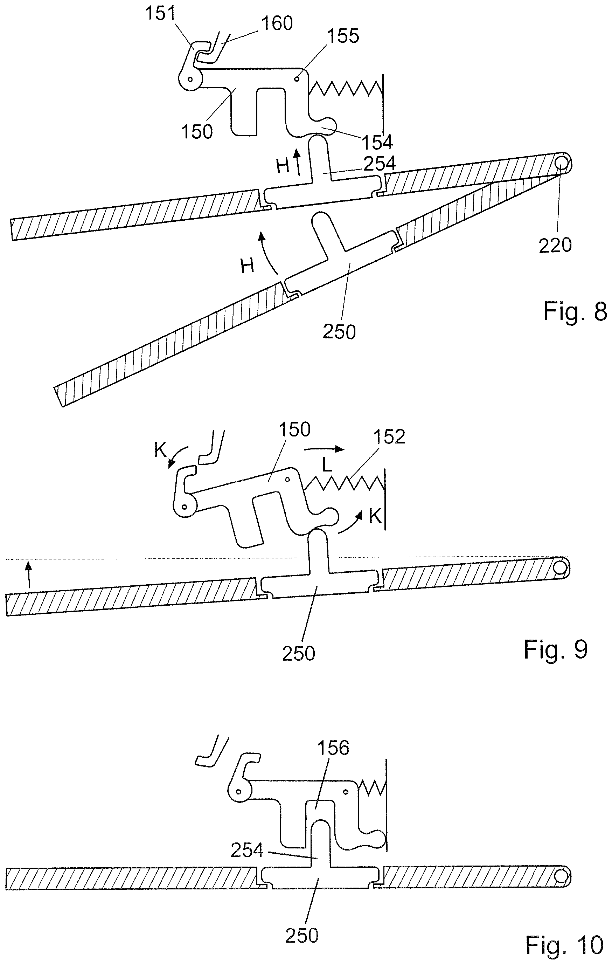

Nach erfolgtem Test wird die Verkleidungs-Klappe 210 wieder manuell geschlossen. Figur 8 zeigt, dass bei einer Bewegung in Pfeilrichtung H das Betätigungselement 250 mit einem Zapfen 254 zunächst an einem Vorsprung 154 anliegt, wobei der Vorsprung 154 an dem Verriegelungselement 150 ausgebildet ist.

Bei einem weiteren Schließen der Verkleidungs-Klappe wird nun das VerriegelungsElement 150 in Richtung des Pfeils K um den Drehpunkt 155 geschwenkt, so dass der Haken 151 von der Lasche 160 abrutscht, wie in Figur 9 dargestellt. Damit wird das Verriegelungselement 150 aufgrund der Wirkung der Feder 152 in Pfeilrichtung L zurückgezogen, so dass einerseits der Zapfen 254 an dem Betätigungselement 250 wieder in eine Aussparung 156 an dem Verriegelungselement 150 eingreift und andererseits das Verriegelungselement 150 wieder in seiner Ursprungsposition, das heißt in einer Freigabe-Position angeordnet ist. Diese mit der Ausgangsposition in Figur 4 vergleichbare Anordnung ist in Figur 10 dargestellt.

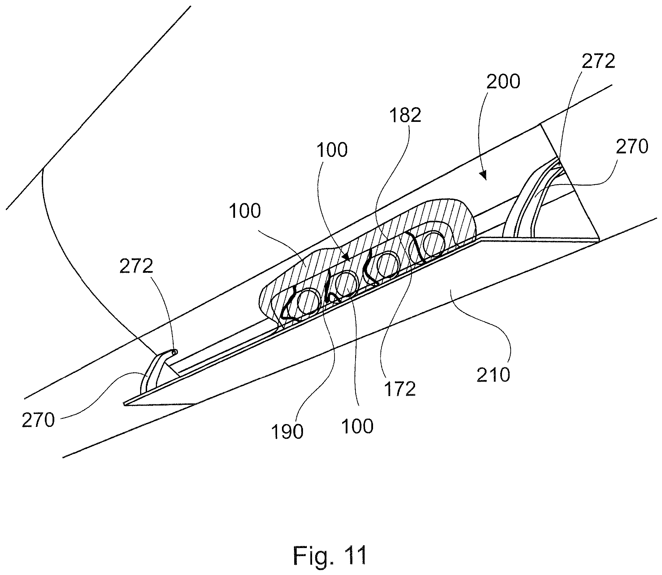

In der Ausführungsform gemäß einem zweiten Aspekt der Erfindung, die in Figur 11 dargestellt ist, weist das Sauerstoff-Modul 100 ein Gehäuse auf, welches aus einem dünnen Material hergestellt ist. Beispielsweise kann das Gehäuse eine Folie aufweisen, welche die Masken, die Schläuche und die Sauerstoffquelle umschließt. Das Gehäuse weist ferner einen Deckel-Bereich 170 und einen Rahmen-Bereich 180 auf, wobei der Deckel-Bereich 170 einen Rand 172 bildet und der Rahmen-Bereich 180 einen Rand 182 bildet. Die beiden Ränder 172, 182 sind an einer gemeinsamen Trennlinie angeordnet, wenn das Gehäuse des Sauerstoff-Moduls geschlossen ist.

Wie in Figur 11 zu sehen, kann die Verkleidungs-Klappe 210 Führungsschienen 270 aufweisen, die gebogen ausgebildet sind, sodass jeweils ein Zapfen 272 in diese Führungsschienen eingreifen kann. Für einen Test der Verkleidungs-Klappen können die Zapfen so angeordnet sein, dass sie in die Führungsschienen eingreifen und damit verhindern, dass sich die Verkleidungs-Klappe weiter öffnet, als durch die Länge der Führungsschienen vorgegeben.

Die Zapfen 272 können auch außer Eingriff mit den Schienen 270 gebracht werden, sodass sich die Verkleidungs-Klappe beispielsweise im Fall eines Druckabfalls vollständig öffnen können. Die Verkleidungs-Klappen werden dann aufgrund ihres Gewichts und ihrer einseitig gelenkigen Lagerung vollständig aufklappen.

Zwischen dem Deckel-Bereich 170 und der Verkleidungs-Klappe 210 ist zumindest ein Löseelement angebracht. Das Löseelement kann mit seinem einen Ende in der Nähe des Randes 172 des Deckel-Bereichs 170 befestigt sein, und kann mit seinem anderen Ende nach einem Einsetzen des Sauerstoff-Moduls in einen Versorgungskanal mit einem Verbindungselement 280 an der Verkleidungs-Klappe leicht verbunden werden.

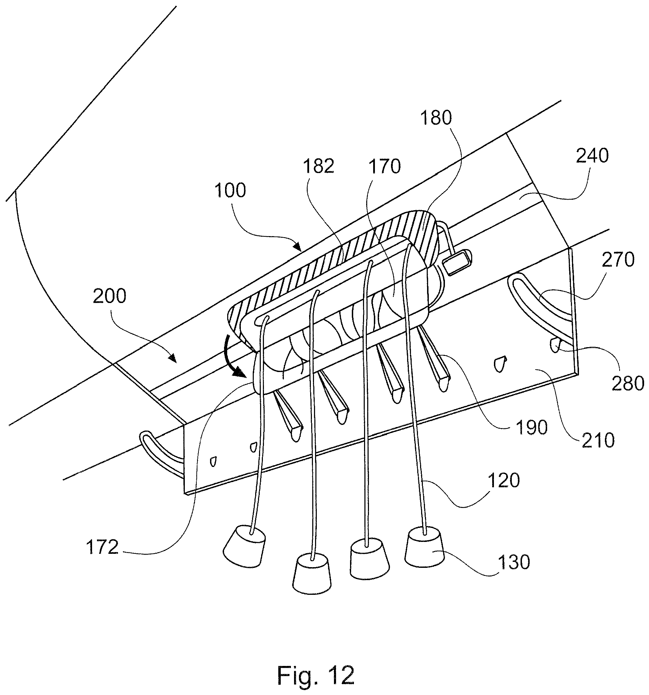

Im Fall eines vollständigen Öffnens der Verkleidungs-Klappe wird das Löseelement 190 den Deckel-Bereich 170 an der Trennlinie zum Rahmen-Bereich 180 von diesem lösen, sodass der Deckel-Bereich geöffnet wird und die Atemmasken aus dem Sauerstoff-Modul 100 herausfallen können. Dies ist in Figur 12 dargestellt.

In Figur 12 ist ferner erkennbar, dass die gebogenen Führungsschienen 270 nicht mehr in Kontakt mit den Zapfen 272 sind und dass die Löseelemente 190 in hakenartigen Verbindungselementen 280 eingehängt sind. Beim Herunterfallen der Verkleidungs-Klappe haben die Löseelemente 190 den Rand 172 des Deckel-Bereichs 170 vom Rand 182 des Rahmen-Bereichs 180 getrennt und somit das Sauerstoff-Modul geöffnet, wie durch den Pfeil angedeutet. Aus dem geöffneten Gehäuse des Sauerstoff-Moduls 100 sind damit die Masken 130 herausgefallen, die über die Schläuche 120 mit einer Sauerstoffquelle verbunden sind.

Wie schon weiter oben beschrieben, ist auch hier das Sauerstoff-Modul mittels einer Befestigungsschiene 240 in einem Versorgungskanal 200 befestigt.

Es wird angemerkt, dass die lösbare Verbindung an der Trennlinie zwischen dem Deckel-Bereich 170 und dem Rahmen-Bereich 180 eine Perforation in einer Folie, ein Klettverschluss, eine Soll-Bruchstelle oder auch ein Schnappverschluss mit entsprechenden Strukturen sein kann.

Außerdem wird darauf hingewiesen, dass eine Kombination der Verriegelungsstrukturen, die in den Figuren 2 und 3 dargestellt sind mit dem Löseelement gemäß der Figuren 11 oder 12, eine Ausführungsform der Erfindung darstellt. Dies ist in Figur 7 angedeutet.

Die gestrichelten Linien in Figur 7 zeigen, dass der Haken 151 auch über ein Löseelement 190 mit der Verriegelungs-Klappe 210 verbunden sein kann. Wenn das Löseelement 190 beispielsweise eine Schnur oder Leine ist, ist dieses Löseelement 190(a) locker zwischen den Befestigungspunkten an dem Haken 151 und der Verriegelungs-Klappe 210 angeordnet, solange der Verriegelungs-Klappe 210 geschlossen ist.

Im Test-Fall, der auch in Figur 7 dargestellt ist, ist dann das Löseelement 190(b) im Wesentlichen gestreckt, jedoch weiterhin ohne eine Kraft aufzunehmen bzw. zu übertragen.

Sollte bei einem vollständigen Öffnen der Verkleidungs-Klappe der Verriegelungsmechanismus den Deckel nicht freigeben, würde das Löseelement 190 den Haken 151 von der Lasche 160 ziehen und damit den Deckel öffnen. Auf diese Weise wird eine erhöhte Sicherheit erzielt.

Gemäß der Erfindung wird somit ein Sauerstoff-Modul bereitgestellt, welches leicht vormontiert werden kann, da ein Deckel an dem Sauerstoff-Modul vorgesehen ist, welcher verriegelbar ist. Dieses vorkonfektionierte Sauerstoff-Modul mit verriegeltem Deckel kann nun leicht an einer beliebigen Stelle in Längsrichtung in einen Versorgungskanal eines Flugzeugs eingesetzt werden. Sobald ausreichend viele Sauerstoff-Module, je nach Sitz-Layout, an den gewünschten Positionen in dem Versorgungskanal angeordnet sind, können die Verkleidungs-Klappen des Versorgungskanals manuell geschlossen werden, was dazu führen kann (wie oben beschrieben), dass die Deckel der Sauerstoff-Module automatisch entriegelt werden.

Für den Fall, dass es gewünscht ist, das Sitz-Layout des Passagierraums oder lediglich eines Teils des Passagierraums zu ändern, können zunächst manuell mittels der Betätigungselemente an den Verkleidungs-Klappen die Deckel der entsprechenden Sauerstoff-Module verriegelt werden. Anschließend wird über einen elektrischen Impuls oder auch manuell das Öffnen der entsprechenden Verkleidungs-Klappen ausgelöst, wodurch ein freier Zugang zu den unter diesen Verkleidungs-Klappen angeordneten Sauerstoff-Modulen gegeben ist. Nachdem die Sauerstoff-Module neu angeordnet bzw. verschoben oder versetzt wurden, können die Verkleidungs-Klappen wieder geschlossen werden, wodurch die Deckel der Sauerstoff-Module wieder entriegelt sein können.

Im Fall einer Wartung kann ein fehlerhaftes Sauerstoff-Modul leicht ausgetauscht werden.

Während die Erfindung illustriert und beschrieben wurde im Detail in den Zeichnungen und der vorangegangenen Beschreibung, ist es beabsichtigt, dass derartige Illustrationen und Beschreibungen lediglich illustrativ und exemplarisch und nicht restriktiv sind, so dass die Erfindung nicht durch die offenbarten Ausführungsformen beschränkt ist.

Andere Variationen der offenbarten Ausführungsformen können durch einen Fachmann beim Umsetzen der beanspruchten Erfindung verstanden und bewirkt werden, aus einem Studium der Zeichnungen, der Offenbarung und der anhängenden Ansprüche. In den Ansprüchen schließt das Wort "aufweisend" nicht andere Elemente oder Schritte aus, und der unbestimmte Artikel "ein" schließt eine Mehrzahl nicht aus. Alleinig der Umstand, dass bestimmte Merkmale in verschiedenen abhängigen Ansprüchen genannt sind, beschränkt nicht den Gegenstand der Erfindung. Auch beliebige Kombinationen dieser Merkmale können vorteilhaft eingesetzt werden. Die Bezugszeichen in den Ansprüchen sollen nicht den Umfang der Ansprüche beschränken.

### BEZUGSZEICHENLISTE

- 100: Sauerstoff-Modul
- 110: Sauerstoffquelle
- 120: Schlauch
- 130: Maske
- 140: Befestigungselement
- 150: Verriegelungselement
- 151: Haken
- 152: Rückstellfeder
- 153: Gelenkpunkt für Haken
- 154: Vorsprung
- 155: Drehpunkt vom Verriegelungselement
- 156: Aussparung
- 160: Lasche
- 170: Deckel, Deckel-Bereich
- 172: Rand des Deckel-Bereichs
- 180: Gehäuse oder Rahmen, Rahmen-Bereich
- 182: Rand des Rahmen-Bereichs
- 190: Löseelement
- 200: Versorgungskanal
- 210: Verkleidungs-Klappe
- 220: Klappengelenke
- 230: Schließelement
- 240: Befestigungselement
- 250: Betätigungselement
- 252: Rückstellfeder
- 254: Zapfen
- 260: Betätigungsschiene
- 265: Bedienelement für Betätigungsschiene
- 270: Führungsschiene
- 272: Zapfen für Führungsschiene
- 280: Verbindungselement

## Patentansprüche

1. Ein Sauerstoff-Modul (100) zur Versorgung von Flugzeug-Passagieren, mit
- einer Sauerstoffquelle (110),
- einer Maske (130) und
- einem Schlauch (120) zwischen der Sauerstoffquelle und der Maske,
wobei das Sauerstoff-Modul ein Befestigungselement (140) zur Befestigung in einem Versorgungskanal (200) eines Flugzeugs, einen von einer Verkleidungs-Klappe des Versorgungskanals abdeckbaren Deckel (170) und ein Verriegelungselement (150) aufweist,
wobei das Verriegelungselement (150) derart gestaltet ist, dass der Deckel (170) des Sauerstoff-Moduls (100) bei einem Öffnungstest der Verkleidungs-Klappe (210) verriegelbar ist und sich nicht öffnet und dass der Deckel (170) des Sauerstoff-Moduls (100) bei einem automatischen Öffnen der Verkleidungs-Klappe entriegelt und freigegeben ist und sich öffnet.

2. Ein Sauerstoff-Modul (100) zur Versorgung von Flugzeug-Passagieren, mit
- einer Sauerstoffquelle (110),
- einer Maske (130) und
- einem Schlauch (120) zwischen der Sauerstoffquelle und der Maske,
wobei das Sauerstoff-Modul ein Befestigungselement (140) zur Befestigung in einem Versorgungskanal (200) eines Flugzeugs, einen von einer Verkleidungs-Klappe des Versorgungskanals abdeckbaren Deckel (170) und ein Verriegelungselement (272) aufweist,
wobei das Verriegelungselement (272) derart mit der Verkleidungs-Klappe (210) koppelbar ist, dass sie sich bei einem Öffnungstest der Verkleidungs-Klappe nicht vollständig öffnet und sich der Deckel (170) des Sauerstoff-Moduls (100) nicht öffnet und dass sich der Deckel (170) des Sauerstoff-Moduls (100) bei einem automatischen, vollständigen Öffnen der Verkleidungs-Klappe öffnet.

3. Sauerstoff-Modul nach Anspruch 1, wobei das Verriegelungselement (150) in eine erste Position bewegbar ist, sodass der Deckel (170) entriegelt ist, wenn das Sauerstoff-Modul in einem Versorgungskanal (200) eingesetzt ist und der Deckel des Sauerstoff-Moduls durch eine Verkleidungs-Klappe (210) abgedeckt ist; und
wobei das Verriegelungselement (150) in eine zweite Position bewegbar ist, sodass der Deckel (170) des Sauerstoff-Moduls (100) verriegelt ist, wenn das Sauerstoff-Modul in dem Versorgungskanal eingesetzt ist und der Deckel des Sauerstoff-Moduls durch eine Verkleidungs-Klappe abgedeckt ist.

4. Sauerstoff-Modul nach Anspruch 2, ferner ein Löseelement (190) aufweisend, welches derart zwischen dem Sauerstoff-Modul (100) und der Verkleidungs-Klappe (210) anbringbar ist, dass sich der Deckel (170) des Sauerstoff-Moduls (100) öffnet, sobald die Verkleidungs-Klappe über ein vorbestimmtes Maß hinaus geöffnet wird.

5. Sauerstoff-Modul nach Anspruch 1 oder 2 wobei das Befestigungselement (140) so ausgebildet ist, dass das Sauerstoff-Modul innerhalb des Versorgungskanals (200) verschiebbar ist.

6. Sauerstoff-Modul nach Anspruch 1 oder 2, wobei das Sauerstoff-Modul (100) mehrere Masken (130) und Schläuche (120) aufweist.

7. Sauerstoff-Modul nach Anspruch 1 oder 2, wobei das Sauerstoff-Modul (100) mehrere Sauerstoff-Quellen (110) aufweist.

8. Ein Sauerstoff-Versorgungskanal (200) zur Aufnahme eines Sauerstoff-Moduls gemäß Anspruch 1 oder 2, wobei der Sauerstoff-Versorgungskanal die Verkleidungs-Klappe (210) und eine Befestigungsstruktur (240) aufweist, wobei die Befestigungsstruktur derart ausgebildet ist, dass das Sauerstoff-Modul (100) in Längsrichtung des Versorgungskanals frei positionierbar ist.

9. Sauerstoff-Versorgungskanal nach Anspruch 8, wenn ausgebildet zur Aufnahme eines Sauerstoff-Moduls gemäß Anspruch 1, wobei der Sauerstoff-Versorgungskanal ferner ein Betätigungselement (250, 260) zur Betätigung des Verriegelungselementes (150) des Sauerstoff-Moduls (100) aufweist.

10. Sauerstoff-Versorgungskanal nach Anspruch 8, wenn ausgebildet zur Aufnahme eines Sauerstoff-Moduls gemäß Anspruch 2, wobei der Sauerstoff-Versorgungskanal ferner ein Verbindungselement (280) an der Verkleidungs-Klappe (210) aufweist, wobei das Löseelement (190) des Sauerstoff-Moduls (100) mit dem Verbindungselement verbindbar ist, wenn das Sauerstoff-Modul in den Sauerstoff-Versorgungskanal (200) eingesetzt ist und die Verkleidungs-Klappe (210) nicht über ein bestimmtes Maß hinaus geöffnet ist.

11. Ein Flugzeug mit einem Sauerstoff-Versorgungskanal gemäß Anspruch 8 und einem Sauerstoff-Modul gemäß Anspruch 1 oder 2.

## Claims

1. Oxygen module (100) for the supply of oxygen to aircraft passengers, comprising
- an oxygen source (110)
- a mask (130) and
- a hose (120) between the oxygen source and the mask,
wherein the oxygen module comprises a mounting member (140) for mounting in a supply channel (200) of an aircraft, a cover (170) coverable by a fairing flap of the supply channel, and a locking member (150),
wherein the locking element (150) is configured such that the cover (170) of the oxygen module (100) is lockable and does not open during an opening test of the fairing flap (210) and that the cover (170) of the oxygen module (100) is unlocked and released and opens during an automatic opening of the fairing flap.

2. Oxygen module (100) for supplying aeroplane passengers, comprising
- an oxygen source (110),
- a mask (130) and
- a hose (120) between the oxygen source and the mask,
wherein the oxygen module comprises a mounting member (140) for mounting in a supply channel (200) of an aircraft, a cover (170) coverable by a fairing flap of the supply duct, and a locking member (272),
wherein the locking element (272) is couplable to the cowling flap (210) such that it does not fully open and the cover (170) of the oxygen module (100) does not open during an opening test of the cowling flap, and such that the cover (170) of the oxygen module (100) opens during an automatic, full opening of the cowling flap.

3. Oxygen module of claim 1, wherein the locking member (150) is movable to a first position such that the lid (170) is unlocked when the oxygen module is inserted into a supply duct (200) and the lid of the oxygen module is covered by a cowl flap (210); and
wherein the locking member (150) is movable to a second position such that the lid (170) of the oxygen module (100) is locked when the oxygen module is inserted in the supply channel and the lid of the oxygen module is covered by a cladding flap.

4. Oxygen module according to claim 2, further comprising a release element (190) which is attachable between the oxygen module (100) and the cover flap (210) such that the cover (170) of the oxygen module (100) opens as soon as the cover flap is opened beyond a predetermined extent.

5. Oxygen module according to claim 1 or 2, wherein the fastening element (140) is designed such that the oxygen module is displaceable within the supply channel (200).

6. Oxygen module according to claim 1 or 2, wherein the oxygen module (100) comprises a plurality of masks (130) and tubes (120).

7. Oxygen module according to claim 1 or 2, wherein the oxygen module (100) comprises a plurality of oxygen sources (110).

8. Oxygen supply channel (200) for receiving an oxygen module according to claim 1 or 2, wherein the oxygen supply channel comprises the (210) and a mounting structure (240), the mounting structure being configured such that the oxygen module (100) is freely positionable in the longitudinal direction of the supply channel.

9. Oxygen supply channel according to claim 8, when configured to receive an oxygen module according to claim 1, wherein the oxygen supply channel further comprises an actuating element (250, 260) for actuating the locking element (150) of the oxygen module (100).

10. Oxygen supply channel according to claim 8, when configured to receive an oxygen module according to claim 2, wherein said oxygen supply channel further comprises a connecting member (280) on said fairing flap (210), wherein said release member (190) of said oxygen module (100) is connectable to said connecting member when said oxygen module is inserted into said oxygen supply channel (200) and said fairing flap (210) is not opened beyond a predetermined extent.

11. An aircraft having an oxygen supply channel according to claim 8 and an oxygen module according to claim 1 or 2.

## Revendications

1. Module d'oxygène (100) pour l'alimentation des passagers de l'avion, comprenant
- une source d'oxygène (110)
- un masque (130), et
- un tuyau (120) entre la source d'oxygène et le masque,
dans lequel le module d'oxygène comprend un élément de montage (140) destiné à être monté dans une canal d'alimentation (200) d'un avion, un couvercle (170) pouvant être recouvert par un volet de carénage de la canal d'alimentation, et un élément de verrouillage (150),
dans lequel l'élément de verrouillage (150) est configuré de telle sorte que le couvercle (170) du module d'oxygène (100) peut être verrouillé et ne s'ouvre pas lors d'un test d'ouverture du volet de carénage (210) et que le couvercle (170) du module d'oxygène (100) est déverrouillé et libéré et s'ouvre lors d'une ouverture automatique du volet de carénage.

2. Module d'oxygène (100) pour l'alimentation des passagers de l'avion, comprenant
- une source d'oxygène (110),
- un masque (130), et
- un tuyau (120) entre la source d'oxygène et le masque,
dans lequel le module d'oxygène comprend un élément de montage (140) destiné à être monté dans une canal d'alimentation (200) d'un avion, un couvercle (170) pouvant être recouvert par un volet de carénage de la canal d'alimentation, et un élément de verrouillage (272),
dans lequel l'élément de verrouillage (272) peut être couplé au volet de carénage (210) de telle sorte qu'il ne s'ouvre pas complètement et que le couvercle (170) du module d'oxygène (100) ne s'ouvre pas pendant un test d'ouverture du volet de carénage, et de telle sorte que le couvercle (170) du module d'oxygène (100) s'ouvre pendant une ouverture complète automatique du volet de carénage.

3. Module d'oxygène selon la revendication 1, dans lequel l'élément de verrouillage (150) est mobile vers une première position de telle sorte que le couvercle (170) est déverrouillé lorsque le module d'oxygène est inséré dans un canal d'alimentation (200) et que le couvercle du module d'oxygène est recouvert par un volet de carénage (210) ; et
dans lequel l'élément de verrouillage (150) est mobile vers une deuxième position de telle sorte que le couvercle (170) du module d'oxygène (100) est verrouillé lorsque le module d'oxygène est inséré dans le canal d'alimentation et que le couvercle du module d'oxygène est recouvert par un volet de recouvrement.

4. Module d'oxygène selon la revendication 2, comprenant en outre un élément de déclenchement (190) pouvant être fixé entre le module d'oxygène (100) et le volet de couverture (210) de telle sorte que le couvercle (170) du module d'oxygène (100) s'ouvre dès que le volet de couverture est ouvert au-delà d'une étendue prédéterminée.

5. Module d'oxygène selon la revendication 1 ou 2, dans lequel l'élément de fixation (140) est configuré de telle sorte que le module d'oxygène puisse coulisser dans le canal d'alimentation (200).

6. Module d'oxygène selon la revendication 1 ou 2, dans lequel le module d'oxygène (100) comprend une pluralité de masques (130) et de tubes (120).

7. Module d'oxygène selon la revendication 1 ou 2, dans lequel le module d'oxygène (100) comprend une pluralité de sources d'oxygène (110).

8. Canal d'alimentation en oxygène (200) pour recevoir un module d'oxygène selon la revendication 1 ou 2, dans lequel le canal d'alimentation en oxygène comprend (210) et une structure de montage (240), dans laquelle la structure de montage est configurée de telle sorte que le module d'oxygène (100) peut être positionné librement dans la direction longitudinale du canal d'alimentation.

9. Canal d'alimentation en oxygène selon la revendication 8, lorsqu'il est configuré pour recevoir un module d'oxygène selon la revendication 1, dans lequel le canal d'alimentation en oxygène comprend en outre un élément d'actionnement (250, 260) pour actionner l'élément de verrouillage (150) du module d'oxygène (100).

10. Canal d'alimentation en oxygène selon la revendication 8, lorsqu'il est configuré pour recevoir un module d'oxygène selon la revendication 2, dans lequel ledit canal d'alimentation en oxygène comprend en outre un élément de connexion (280) sur ledit volet de carénage (210), dans lequel ledit élément de libération (190) dudit module d'oxygène (100) peut être connecté audit élément de connexion lorsque ledit module d'oxygène est inséré dans ledit canal d'alimentation en oxygène (200) et ledit volet de carénage (210) n'est pas ouvert au-delà d'une certaine étendue.

11. Aéronef comprenant un canal d'alimentation en oxygène selon la revendication 8 et un module d'oxygène selon la revendication 1 ou 2.
